# EUROPÄISCHE PATENTSCHRIFT

(11) **EP 1 634 494 B1**
(45) Veröffentlichungstag und Bekanntmachung des Hinweises auf die Patenterteilung: **13.02.2008**
(21) Anmeldenummer: 05018277.3
(22) Anmeldetag: 23.08.2005
(51) Int. Cl.: A01K 5/00, B01F 7/24

(54) **Mischvorrichtung**
Mixing device
Dispositif de mélange

(30) Priorität: 08.09.2004 DE 202004014031 U
(43) Veröffentlichungstag der Anmeldung: 15.03.2006
(73) Patentinhaber: Trioliet Mullos B.V., 7570 AC Oldenzaal (NL)
(72) Erfinder: Van der Plas, Nicolaas, 7576 WX Oldenzaal (NL)
(74) Vertreter: Grünecker, Kinkeldey, Stockmair & Schwanhäusser Anwaltssozietät

(56) Entgegenhaltungen:
- EP-A- 0 003 813
- EP-A- 1 417 999
- DE-U1- 20 107 602
- GB-A- 2 310 793

## Beschreibung

Die Erfindung bezieht sich auf eine Mischvorrichtung der im Oberbegriff von Anspruch 1 erläuterten Art.

Eine derartige Mischvorrichtung ist beispielsweise aus der EP 14 17 999 bekannt. Diese Druckschrift beschreibt eine Mischvorrichtung in Form eines Futtermischers mit einer Mischschnecke, wobei über den Rand der Mischschnecke Schneidmesser vorstehen. Die Schneidmesser liegen in einer im Wesentlichen horizontalen Ebene, sind allerdings nicht am Schneckenblatt befestigt, sondern werden über eine geeignete, radiale Haltekonstruktion jeweils von der Drehachse gehalten.

Aus der US-A-5 456 416 ist ein Futtermischer mit einem Mischbehälter und einer Mischschnecke, die im Mischbehälter um eine im Wesentlichen vertikale Achse drehbar angeordnet ist, bekannt. Das in den Mischbehälter eingefüllte Futter wird durch die Mischschnecke vom Boden aufgenommen und nach oben transportiert, von wo es wieder zurück auf den Boden fällt. Im Mischbehälter bilden sich somit zwei Förderströme für das Mischgut bzw. das Futter aus, zum einen eine Aufwärtsbewegung durch die Schnecke und zum anderen eine Abwärtsbewegung, die gleichzeitig rund um die Schnecke eine Art Begrenzungswand bildet, die erst erlaubt, dass sich das Futter durch die Schnecke nach oben bewegt (Prinzip der Archimedesschraube). Zur Zerkleinerung des Futters enthält die bekannte Mischvorrichtung eine Vielzahl von Schneidmessern, die am Schneckenblatt befestigt sind und über den Rand des Schneckenblattes nach außen vorstehen. Die Schneidmesser sind einstückig aus einem flachen Materialstück gefertigt und mit einer Vielzahl eng benachbarter Bolzen am Schneckenblatt angeschraubt bzw. angenietet. Die Schneidmesser sind gleichmäßig über die Höhe der Schnecke verteilt und bilden eine Verlängerung des Schneckenblattes nach außen. Am obersten Ende der Schnecke ist das Schneckenblatt etwas nach oben gebogen, so dass das dort befestigte Schneidmesser unter einem Winkel bis zu 25° nach oben weist und dadurch eingefüllte Futterballen besser aufrei-ßen kann. Aber auch hier ist das Schneidmesser in Verlängerung des Schneckenblattes nach außen angeordnet. Diese Konstruktion ist jedoch in doppelter Hinsicht nachteilig. Zum einen ist das Schneidmesser praktisch eine Verlängerung des Schneckenblattes nach außen. Das bedeutet, dass das Schneidmesser die gleiche Steigung aufweist wie das Schneckenblatt, wobei die in der Rotation der Schnecke vorlaufende Schnittkante tiefer liegt als die nachlaufende Hinterkante des Schneidmessers. Dies bedeutet jedoch, dass das Schneidmesser bestrebt ist, Futter in einem Bereich, in dem das Futter normalerweise nach unten fällt, wieder nach oben zu drücken, was die Mischbewegung im Mischbehälter stört. Außerdem wird die Abwärtsbewegung immer wieder unterbrochen und das Futter durch die spiralig nach außen weisende Schneidkante radial nach außen gedrückt. Ein weiterer Nachteil liegt in der Art der Befestigung der bekannten Schneidmesser. Schneckenblätter sind nicht eben. Wird nun versucht, ein ebenes Schneidmesser am Schneckenblatt, beispielsweise durch Bolzen, festzuziehen, so wird das Schneidmesser unter Spannung gesetzt. Diese Spannung kann bei einer Extrembelastung, beispielsweise beim Einwerfen von Rundballen auf die Schneidmesser, zu einer Beschädigung des Schneidmessers führen.

Eine weitere Mischvorrichtung mit Schneidmessern ist aus der GB 2 310 793 bekannt. Die bekannten Schneidmesser erstrecken sich im Wesentlichen horizontal, sind jedoch mittels Befestigungsarmen im Abstand zum Schneckenblatt befestigt. Dabei bilden sich zwischen den Befestigungsarmen der Schneidmesser und dem Schneckenblatt Spalte, die den Transport des Futters stark stören. Außerdem besteht die Gefahr, dass sich Futter zwischen den Befestigungsarmen und dem Schneckenblatt festklemmt und einen zunehmenden Druck auf die Arme ausübt, was zum Abbrechen bzw. zur Beschädigung führen kann.

Die EP 003 813 beschreibt eine Mischvorrichtung in Form eines Futtermischwagens mit einer Mischschnecke. An der Mischschnecke sind mehrere Rührarme im Abstand voneinander befestigt, die in radialer Richtung von der Achse der Mischschnecke abstehen und in den Innenraum des Mischbehälters hineinreichen. Die Enden der Rührarme sind nach oben abgewinkelt. Die Ausrichtung der Ebene, in der die Rührarme liegen, und der Befestigungsort der Rührarme ist nicht beschrieben.

Die DE 201 07 602 beschreibt eine Futtermischvorrichtung mit einer Mischschnecke und mit Messern, deren Ausgestaltung, Anordnung und Form nicht beschrieben ist. Aus der Zeichnung ist jedoch ersichtlich, dass die Messer nach oben vorstehen.

Der Erfindung liegt somit die Aufgabe zugrunde, eine Mischvorrichtung mit Schneidmessern so weiterzubilden, dass das Mischergebnis verbessert und die Belastung der Schneidmesser reduziert wird.

Die Aufgabe wird durch die im Anspruch 1 angegebenen Merkmale gelöst.

Durch die erfindungsgemäße Ausgestaltung wirkt das Schneidmesser nicht mehr als Verlängerung des Schneckenblattes und ist nicht mehr bestrebt, das außerhalb der Schnecke sich nach unten bewegende Futter wieder nach oben zu drücken. Das Messer wirkt somit weder stauend noch verstärkt es die Förderwirkung radial nach außen. Darüber hinaus bietet das erfindungsgemäße Schneidmesser weniger Widerstand beim Durchführen durch den Abwärtsstrom, so dass die auf das Messer einwirkenden Kräfte verringert werden.

Vorteilhafte Weiterbildungen der Erfindung sind den Unteransprüchen zu entnehmen.

In einem ersten bevorzugten Ausführungsbeispiel liegt die Schnittebene, d.h. diejenige Ebene, in der die Schneidkante liegt, im Wesentlichen parallel zu einem Flugkreis der Aufnahmekante des Schneckenblattes um die Drehachse, was für eine vertikale Mischschnecke bedeutet, dass die Schnittebene im Wesentlichen horizontal verläuft.

In einem weiteren bevorzugten Ausführungsbeispiel ist die Schnittebene unter einem Winkel in Richtung auf einen Flugkreis der Aufnahmekante des Schneckenblattes geneigt, was bei einer vertikalen Mischschnecke bedeutet, dass die Schnittebene in Drehrichtung von oben vom nach unten hinten geneigt ist.

In einem ersten bevorzugten Ausführungsbeispiel verläuft die Schneidkante zwischen einem Schneidkantenanfang und einem Schneidkantenende in der Schnittebene, was zu einem relativ geringen Schnittwiderstand führt.

In einem weiteren bevorzugten Ausführungsbeispiel enthält die Schneidkante einen Anfangsbereich und wenigstens einen in Richtung auf den Flugkreis der Aufnahmekante abgewinkelten Endbereich, wobei der Endbereich demnach in eine Richtung abgewinkelt ist, in der sich das Mischgut bzw. das Futter nach unten bewegt.

Entweder der Anfangsbereich oder der Endbereich oder beide können jeweils in einer Schnittebene liegen, die die Verlängerungsebene des Randes des Schneckenblattes im Winkel schneidet.

Wird eine Innenfläche des Endbereichs spiralig bis tangential zur Drehachse der Mischschnecke gerichtet, so wird eine radial einwärts gerichtete Förderung unterstützt, d.h. das Mischgut wird in Richtung Drehachse gedrückt und somit zum untenliegenden Schneckenteil gefördert.

Die Spannungsausgleichseinrichtung enthält bevorzugt eine Zwei-Punkt-Befestigung des Schneidmessers am Schneckenblatt, so dass die Gefahr stark verringert wird, dass das Schneidmesser beim Befestigen unter Biegespannung gesetzt wird.

Bevorzugt wird die Verlagerung der Schneidkante aus der Verlängerungsebene des Schneckenblattes heraus durch wenigstens einen abgekröpften Verbindungsbereich verwirklicht, da dies eine konstruktiv einfache und sichere Lösung darstellt.

Die erfindungsgemäß ausgebildeten Ausführungsbeispiele von Schneidmessern können auch unabhängig von der Mischvorrichtung als Ersatz- oder Nachrüstteile hergestellt werden.

Ausführungsbeispiele der Erfindung werden nachfolgend anhand der Zeichnungen näher erläutert. Es zeigen:
- Fig.1: eine schematische, geschnittene Darstellung einer erfindungsgemäßen Mischvorrichtung in Seitenansicht,

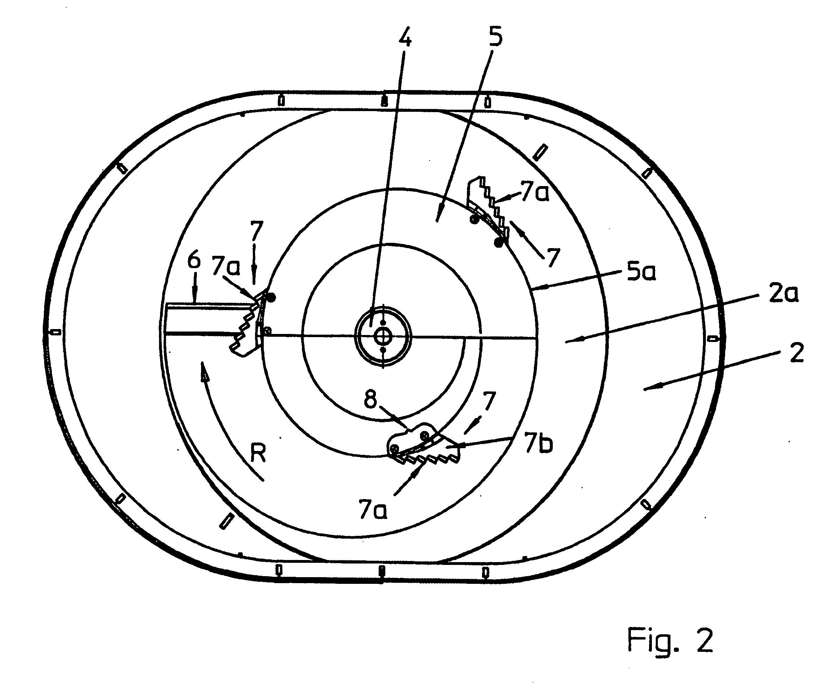

- Fig. 2: die Draufsicht auf Fig. 1,
- Fig. 3: eine perspektivische, vergrößerte Darstellung eines ersten Ausführungsbeispiels eines erfindungsgemäßen Schneidmessers,
- Fig. 4: eine Seitenansicht des Schneidmessers nach Fig. 3,
- Fig. 5: eine perspektivische, vergrößerte Darstellung eines weiteren Ausführungsbeispiels eines erfindungsgemäßen Schneidmessers,
- Fig. 6: eine weitere Ansicht des Schneidmessers gemäß Fig. 5,
- Fig. 7: eine weitere Ansicht des Schneidmessers gemäß Fig. 5, und
- Fig. 8: eine Ansicht ähnlich Fig. 7 eines weiteren Ausführungsbeispiels.

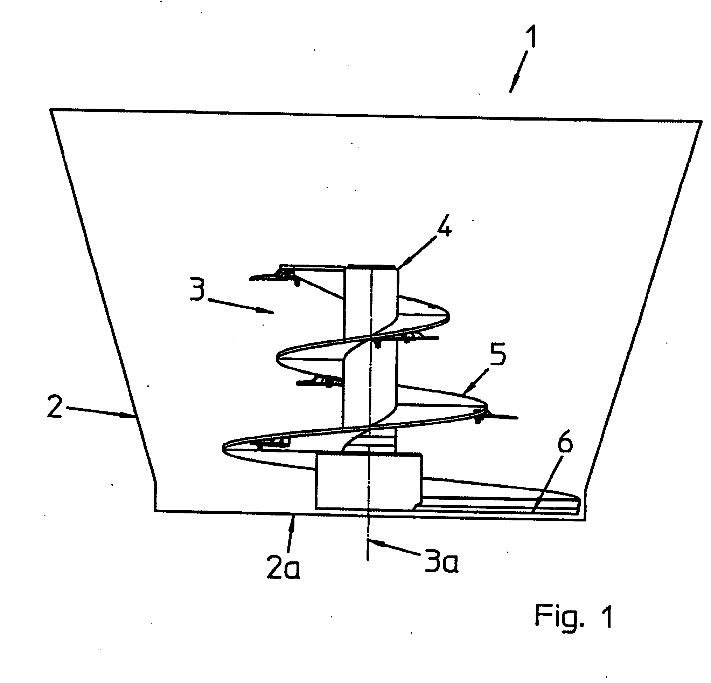

Fig. 1 zeigt in schematischer, geschnittener Seitenansicht eine erfindungsgemäße Mischvorrichtung 1, die im dargestellten Ausführungsbeispiel als Futtermischer, insbesondere Futtermischwagen ausgebildet ist. Die Mischvorrichtung 1 enthält einen Mischbehälter 2, in dem eine Mischschnecke 3 um eine im Wesentlichen vertikale Achse 3a drehbar angetrieben ist. Die Mischschnecke 3 enthält eine innere Schneckenwelle 4 und ein einziges, sich um die Schneckenwelle 4 nach oben windendes Schneckenblatt 5. Das Schneckenblatt 5 beginnt im unteren Bereich des Mischbehälters 2, in der Nähe von dessen Boden 2a, mit einer Aufnahmekante 6, die das Mischgut, im vorliegenden Falle das Futter, bei der Drehung der Mischschnecke 3 um die Achse 3a in Richtung des Pfeiles R vom Boden 2a des Behälters 2 laufend aufnimmt, so dass das neu aufgenommene Mischgut das bereits aufgenommene Mischgut immer weiter über das Schneckenblatt 5 nach oben transportiert. Spätestens am oberen Ende des Schneckenblattes 5 fällt das Mischgut wieder nach unten und bildet um die Schnecke 3 eine Art Hülle, die mithilft, das Mischgut auf dem Schneckenblatt 5 zu halten.

Um die Drehachse 3a herum verteilt sind wenigstens ein bevorzugt eine Mehrzahl von Schneidmessern 7 vorgesehen. Die Schneidmesser 7 weisen ein Messerblatt 7b mit einer gezahnten und/oder geschärften Schneidkante 7a auf, wobei die Schneidkante 7a über den Rand 5a des Schneckenblattes 5 vorsteht und entgegen der Drehrichtung R der Schnecke 3 in einer spiraligen oder tangentialen Anordnung zur Drehachse 3a mit dem Rand 5a in Draufsicht einen spitzen Winkel einschließt. Die Schneidkanten 7a können in üblicher Weise ausgebildet und auf das zu fördernde Mischgut abgestimmt sein.

Jedes der Schneidmesser 7 ist über einen sich in Umfangsrichtung erstreckenden Befestigungsbereich 8 in der Nähe des Randes 5a mit Hilfe zweier zueinander beabstandeter, sich durch Löcher am Rand 5a erstreckender Bolzen 9a bzw. 9b direkt am Schneckenblatt 5 befestigt.

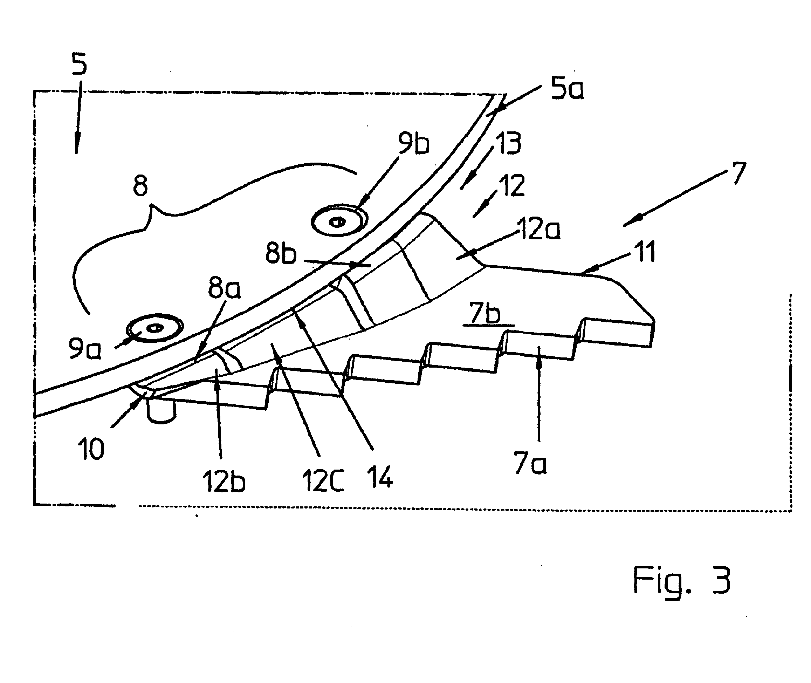

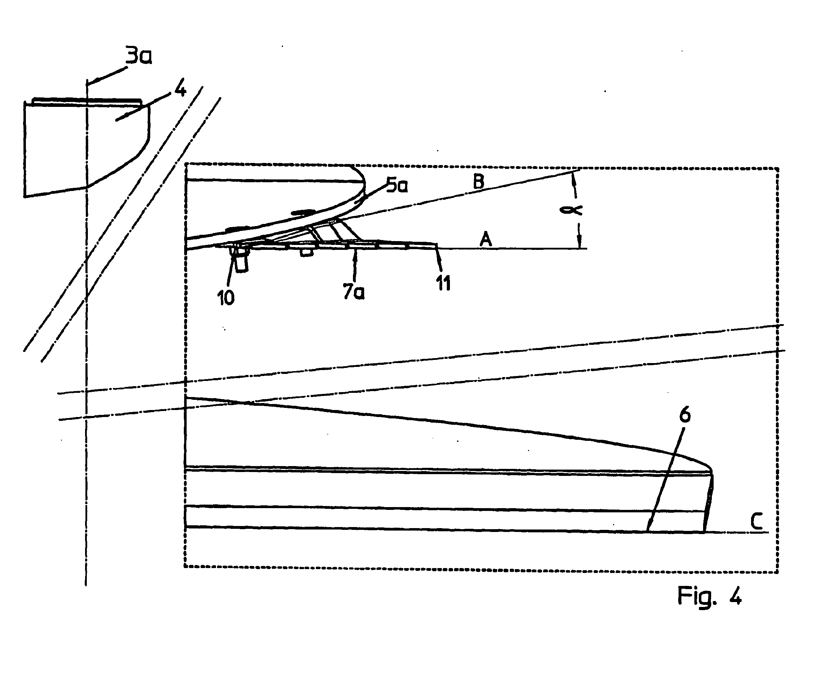

In den Fig. 3 und 4 wird ein erstes Ausführungsbeispiel des Schneidmessers 7 näher erläutert. Das Schneidmesser 7 enthält die bereits beschriebene Schneidkante 7a und das Messerblatt 7b, das einen in Drehrichtung R vorlaufenden spitzen Anfang 10 und ein nachlaufendes Ende in Form einer Kante 11 aufweist. Um die spiralige oder tangentiale Anordnung sicherzustellen, ist das Messerblatt 7b im Anfang 10 schmaler und die Schneidkante 7a radial näher am Rand 5a des Schneckenblattes 5 angeordnet als im nachlaufenden Ende 11. Die Ober- und bevorzugt auch die Unterseite des Messerblattes 7b zwischen Anfangs- und Endbereich 10, 11 ist eben.

Die Schneidkante 7a ist so angeordnet, dass sie in einer Schnittebene A liegt, die gegenüber einer Verlängerungsebene B verlagert ist und die Verlängerungsebene B unter einen Winkel α schneidet, wobei die Verlängerungsebene B eine Verlängerung des Schneckenblattes 5 und somit der Befestigungsabschnitte 8a, 8b nach außen über den Rand 5a hinaus darstellt.. Die Schnittebene A ist weiterhin im Wesentlichen parallel zu einer Ebene C, in der der Flugkreis der Aufnahmekante 6 der Mischschnecke 3 liegt. Bei einer vertikalen Drehachse 3a bedeutet dies, dass die Schnittebene A im Wesentlichen horizontal und senkrecht zur Drehachse 3a verläuft. Im dargestellten Ausführungsbeispiel liegt das Messerblatt 7b und die Schneidkante 7a vollständig, d.h. im gesamten Flächenbereich vom Anfang 10 bis zur nachlaufenden, im Wesentlichen radialen Kante 11 in der Ebene A.

Um die Schneidkante 7a am Schneckenblatt 5 befestigen zu können, ist ein Verbindungsbereich 12 vorgesehen, der im dargestellten Ausführungsbeispiel einstückig mit dem Messerblatt 7b ausgebildet und in geeigneter Weise abgekröpft ist, so dass trotz Befestigung am aufsteigenden Schneckenblatt 5 die Schneidkante 7a mit dem Messerblatt 7b im Wesentlichen waagerecht angeordnet werden können.

Im dargestellten Ausführungsbeispiel ist der Verbindungsbereich 12 Teil einer Spannungsausgleichseinrichtung 13, die eine Zwei-Punkt-Befestigung des Messers 7 am Schneckenblatt 5 umfasst. Die Zwei-Punkt-Befestigung enthält die beiden Bolzen 9a, 9b, deren Abstand den Befestigungsbereich 8 definiert, und zwei Befestigungsabschnitte 8a und 8b am Schneidmesser 7, die über jeweils einen Verbindungsabschnitt 12a, 12b mit dem Messerblatt 7b verbunden sind. Der Befestigungsabschnitt 8a ist dem Anfang 10 und der Befestigungsabschnitt 8b dem Ende 11 des Schneidmessers 7 zugeordnet, wobei die Summe der Längen der beiden Befestigungsabschnitte 8a, 8b parallel zum Rand 5a kleiner ist als die Länge des Schneidmessers 7 bzw. des Verbindungsbereiches 12. Der zwischen den Befestigungsabschnitten 8a, 8b liegende Verbindungsabschnitt 12c ist so ausgebildet, dass auch ein gewölbtes Schneckenblatt 5 das Schneidmesser 7 nicht unter Biegespannung setzen kann, wenn die Bolzen 9a und 9b festgezogen werden. Bevorzugt wird dies durch einen Spalt 14 erreicht, der zwischen dem Verbindungsabschnitt 12c und der Unterseite des Schneckenblattes 5, wenn das Schneidmesser 7 wie dargestellt an der Unterseite des Schneckenblattes 5 befestigt wird, vorgesehen ist. Der Spalt 14 wird bevorzugt in den Verbindungsbereich eingepresst oder eingebogen, kann jedoch auch durch eine erhöhte Flexibilität erzielt werden, beispielsweise durch seitliche Trennschnitte zwischen den Verbindungsabschnitten 12a, 12b und 12c, wobei es im letzteren Falle nicht schädlich ist, wenn der Verbindungsabschnitt 12c stellenweise am Schneckenblatt 5 anschlägt. Wichtig ist, dass das Schneidmesser 7 in einer Zwei-Punkt-Befestigung 13 am Schneckenblatt 5 so befestigt ist, dass es auch durch ein nicht-linear verlaufendes Schneckenblatt 5 nicht unter Biegespannung gesetzt wird.

Das Schneidmesser 7 mit der Schneidkante 7a, dem Messerblatt 7b, dem abgekröpften Verbindungsbereich 12 und den mit den Bolzen 9a, 9b zu befestigenden Befestigungsabschnitten 8a, 8b ist einstückig aus einem flächigen Metallstück hergestellt.

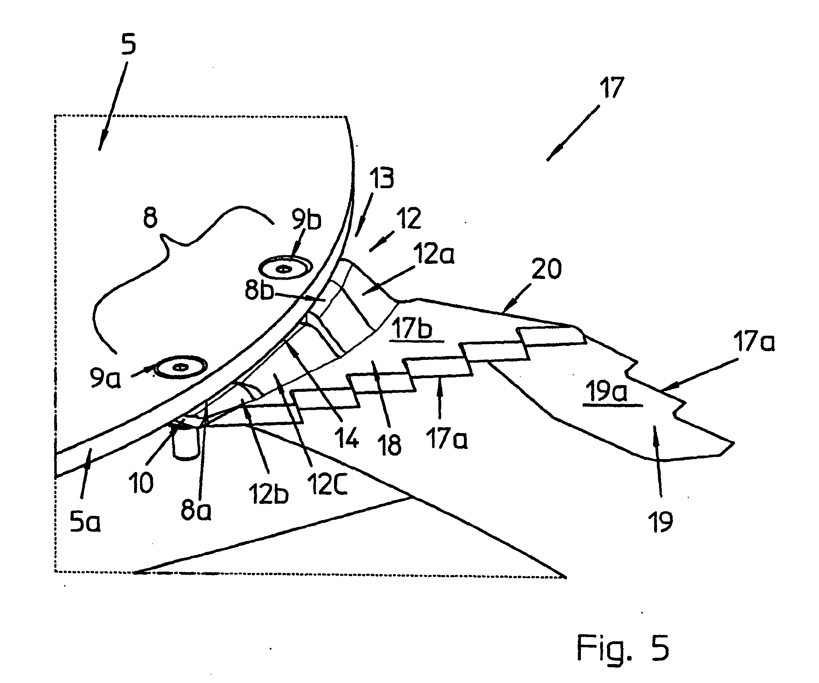

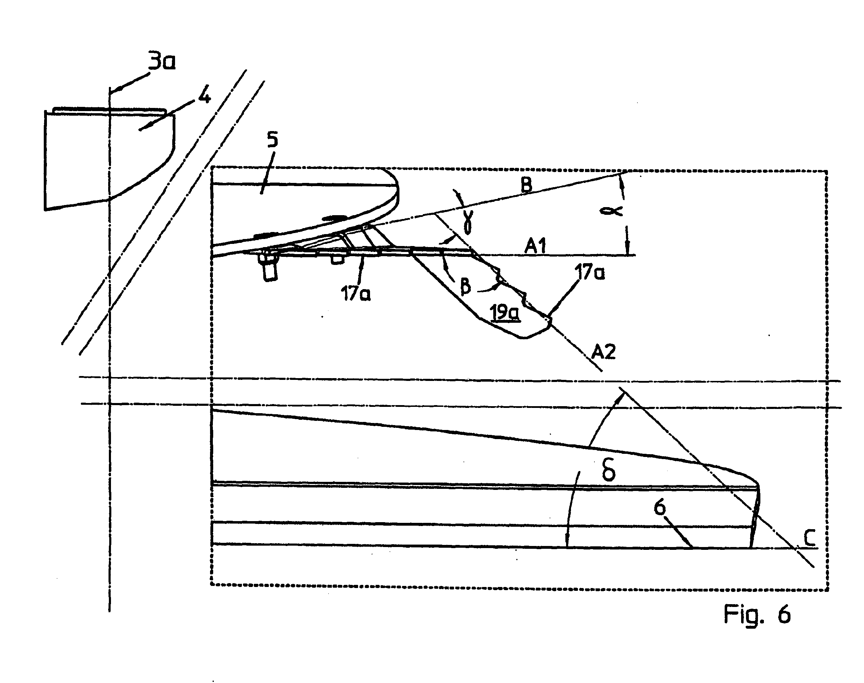

Die Fig. 5 bis 7 zeigen ein weiteres Ausführungsbeispiel eines erfindungsgemäßen Schneidmessers 17, das bis auf die nachfolgend beschriebenen Einzelheiten identisch mit dem Schneidmesser 7 des ersten Ausführungsbeispiels ist, wobei gleiche bzw. vergleichbare Bauteile mit den gleichen Bezugszeichen gekennzeichnet und nicht nochmals erläutert sind.

Das Schneidmesser 17 unterscheidet sich vom Schneidmesser 7 durch ein abgewandeltes Messerblatt 17b mit Schneidkante 17a. Das Messerblatt 17b enthält einen Anfangsbereich 18 und einen Endbereich 19, die mit einer Abwinkelung 20 ineinander übergehen, wobei sich die Schneidkante 17a sowohl über den Anfangsbereich 18 als auch über den Endbereich 19 erstreckt, und die Abwinkelung 20 bevorzugt als Biegekante ausgebildet ist.

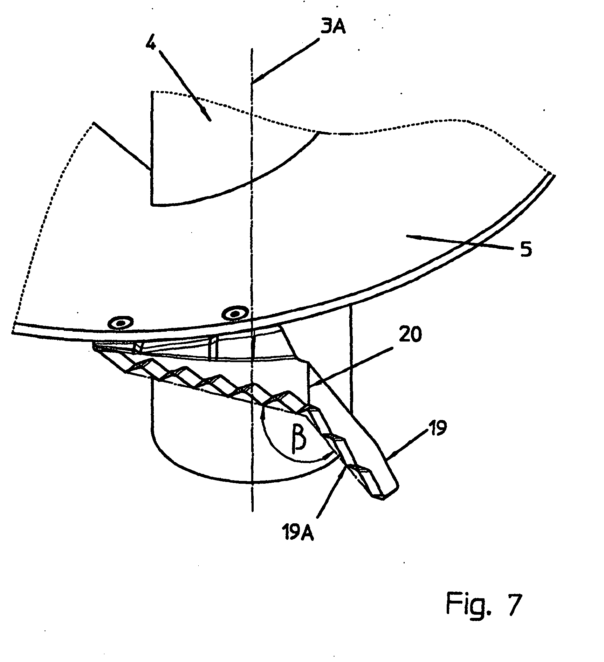

Der Anfangsbereich 18 ist eben und entspricht in seiner Ausgestaltung etwa dem gesamten Messerblatt 7b des Schneidmessers 7, d.h. das Messerblatt 17b im Anfangsbereich 18 verbreitert sich von einer vorlaufenden Spitze 10 nach hinten in Richtung auf die Abwinkelung 20. Der Endbereich 19 ist eben und etwa paddelförmig ausgebildet und vom Anfangsbereich 18 in Richtung auf die Ebene C, d.h. bezüglich der Drehrichtung R von vom oben nach hinten unten, unter einem stumpfen Winkel β abgewinkelt. Der Endbereich 19 weist eine Innenfläche 19a auf, die nach innen, d.h. spiralig bis tangential in Richtung auf die Drehachse 3a weist, so dass das Mischgut in Richtung auf die Drehachse 3a gedrückt wird. Wie insbesondere auch Fig. 7 zeigt, erstreckt sich die Innenfläche 19a bezüglich der Drehachse 3a spiralig oder in Verlängerung einer Tangente.

Die Schneidkante 17a liegt zusammen mit dem Messerblatt 17b im Anfangsbereich 18 und im Endbereich 19 in jeweils einer Schnittebene A1 und A2, die jeweils einen Winkel α bzw. γ mit der Verlängerungsebene B und somit den Befestigungsabschnitten 8a, 8b einschließen. Die Schnittebene A1 entspricht der Schnittebene A und der Winkel α dem Winkel α gemäß Fig. 4, während die Schnittebene A2 einen Winkel γ mit der Verlängerungsebene B einschließt, der größer als α ist, und wobei die Schnittebene A2 weiterhin die Ebene C des Flugkreises der Aufnahmekante 6 unter einem Winkel δ schneidet.

Es ist jedoch auch möglich, dass auch die Schnittebenen A bzw. A1 die Ebene C schneiden.

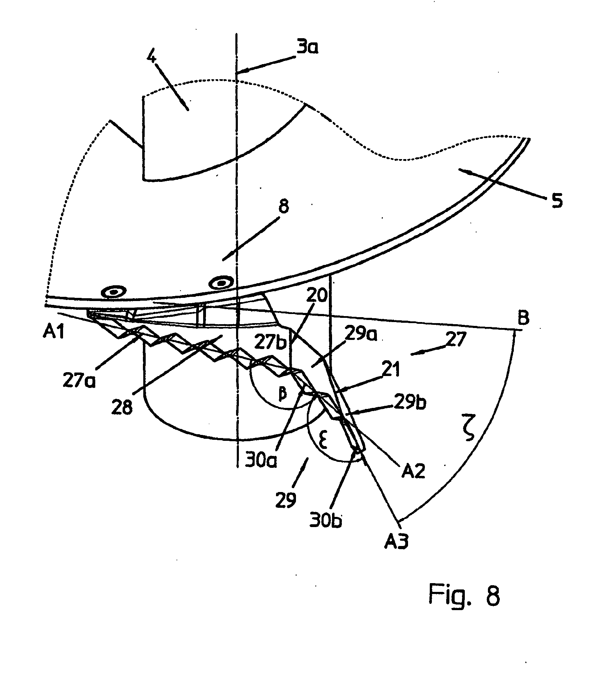

Fig. 8 zeigt ein weiteres Ausführungsbeispiel eines erfindungsgemäßen Schneidmessers 27, das sich vom Schneidmesser der vorangegangenen Ausführungsbeispiele nur durch einen abgewandelten Endbereich 29 unterscheidet, so dass gleiche bzw. vergleichbare Bauteile, wenn erforderlich, mit den gleichen Bezugszeichen gekennzeichnet und nicht nochmals erläutert sind. Der Endbereich 29 des Messerblattes 27b enthält einen ersten, abgewinkelten Abschnitt 29a, der sich über die bereits beschriebene Abwinklung 20 , die als Biegekante ausgebildet sein kann, an den Anfangsbereich 28 des Messerblattes 27b anschließt und mit dem Anfangsbereich 28 den Winkel β einschließt.

An den ersten abgewinkelten Abschnitt 29a schließt sich über eine zweite Abwinklung 21, bevorzugt eine Biegekante, ein zweiter abgewinkelter Abschnitt 29b an, der mit dem ersten abgewinkelten Abschnitt 29a einen stumpfen Winkel E bildet. Beide Abwinklungen 20, 21 können parallel zueinander verlaufen, wodurch die Innenfläche 30a des ersten abgewinkelten Abschnittes 29a und die Innenfläche 30b des zweiten abgewinkelten Abschnittes 29b in gleicher Weise dazu beitragen, das Mischgut in Richtung auf die Drehachse 3 und in den Bereich der Schnecke 5 zu drücken. Die Abwinklungen 20, 21 können jedoch auch einen Winkel miteinander einschließen, wodurch die Funktion der Innenflächen 30a, 30b modifiziert werden kann, falls dies gewünscht ist.

Auch das Schneidmesser 27 enthält eine Schneidkante 27a, die im Anfangsbereich 28 analog des ersten Ausführungsbeispiels und im ersten abgewinkelten Abschnitt 29a analog des zweiten Ausführungsbeispiels ausgebildet ist. Die Schneidkante 27a im zweiten abgewinkelten Abschnitt 29b liegt in einer dritten Schneidebene A3, die in einem Winkel ζ zur Ebene B verläuft und die Ebene C schneidet (nicht gezeigt).

In Abwandlung der beschriebenen und gezeichneten Ausführungsbeispiele ist die Erfindung auch für Mischschnecken einsetzbar, die sich nicht bzw. nicht immer um streng vertikale Drehachsen drehen. Der Spannungsausgleich kann durch andere Maßnahmenverwirklicht werden. Auch kann der Verbindungsbereich nur mit einem einzigen Befestigungsabschnitt versehen sein. Die Schneidmesser können auch aus verschiedenen Teilen zusammengesetzt sein. Im Ausführungsbeispiel mit abgewinkeltem Endbereich ist es weiterhin möglich, dass lediglich im Anfangs- oder Endbereich eine gezahnte und/oder geschärfte Schneidkante vorgesehen ist.

## Patentansprüche

1. Mischvorrichtung (1), insbesondere Futtermischer, mit einer um eine Drehachse (3a) drehbaren, ein Schneckenblatt (5) mit einer Aufnahmekante (6) aufweisenden Mischschnecke (3) und wenigstens einem Schneidmesser (7, 17, 27) mit einer Schneidkante (7a, 17a, 27a), wobei die Schneidkante über den Rand (5a) des Schneckenblatts vorsteht und wenigstens ein Bereich der Schneidkante (7a, 17a, 27a) in einer Schnittebene (A, A1, A2, A3) liegt, die eine im Wesentlichen radiale Verlängerungsebene (B) des Randes (5a) des Schneckenblatts (5) im Winkel (α, γ, ζ) schneidet, **dadurch gekennzeichnet, dass** das Schneidmesser (7, 17, 27) über einen Befestigungsbereich (8) mit Spannungsausgleichseinrichtung (13) am Rand (5a) des Schneckenblatts (5) befestigt ist.

2. Mischvorrichtung nach Anspruch 1, **dadurch gekennzeichnet, dass** die Schnittebene (A, A1) im Wesentlichen parallel zu einer Flugkreisebene (C) der Aufnahmekante (6) des Schneckenblatts (5) um die Drehachse (3a) verläuft.

3. Mischvorrichtung nach Anspruch 1, **dadurch gekennzeichnet, dass** die Schnittebene (A2, A3) unter einem Winkel (δ) in Richtung auf eine Flugkreisebene (C) der Aufnahmekante (6) des Schneckenblatts (5) geneigt ist.

4. Mischvorrichtung nach einem der Ansprüche 1 bis 3, **dadurch gekennzeichnet, dass** die Schneidkante (7a) zwischen einem Schneidkantenanfang (10) und einem Schneidkantenende (11) in der Schnittebene (A) verläuft.

5. Mischvorrichtung nach Anspruch 1 oder 3, **dadurch gekennzeichnet, dass** das Schneidmesser (17, 27) einen sich an einen Schneidkantenanfang (10) anschließenden Anfangsbereich (18, 28) und wenigstens einen in Richtung auf eine Flugkreisebene (C) der Aufnahmekante (6) verlaufenden Endbereich (19, 29a, 29b) aufweist.

6. Mischvorrichtung nach Anspruch 5, **dadurch gekennzeichnet, dass** der Anfangsbereich (18) in einer ersten Schnittebene (A1) und der Endbereich (19) in einer zweiten Schnittebene (A2) liegt.

7. Mischvorrichtung nach Anspruch 5, **dadurch gekennzeichnet, dass** der Anfangsbereich (28) in einer ersten Schnittebene (A1) liegt und der Endbereich (29) einen ersten abgewinkelten Abschnitt (29a) in einer zweiten Schnittebene (A2) und einen zweiten abgewinkelten Abschnitt (29b) in einer dritten, von der ersten und zweiten Schnittebene (A1, A2) verschiedenen Schnittebene (A3) aufweist.

8. Mischvorrichtung nach einem der Ansprüche 5 bis 7, **dadurch gekennzeichnet, dass** der Endbereich (19, 29a, 29b) eine spiralig bis tangential zur Drehachse (3a) der Mischschnecke (3) ausgerichtete Innenfläche (19a, 30a, 30b) aufweist.

9. Mischvorrichtung nach einem der Ansprüche 1 bis 8, **dadurch gekennzeichnet, dass** die Spannungsausgleichseinrichtung (13) eine Zwei-Punkt-Befestigung mit einem ersten und einem zweiten Befestigungsabschnitt (8a, 8b) umfasst, die im Abstand zueinander angeordnet sind, wobei zwischen den Befestigungsabschnitten (8a, 8b) ein Spalt (14) vorgesehen ist.

10. Mischvorrichtung nach einem der Ansprüche 1 bis 9, **dadurch gekennzeichnet, dass** das Schneidmesser (7, 17, 27) einen Befestigungsbereich (8) zur Befestigung am Rand (5a) des Schneckenblatts (5) aufweist, der über wenigstens einen abgekröpften Verbindungsbereich (12) mit der Schneidkante (7a, 17a, 27a) verbunden ist, wobei der abgekröpfte Verbindungsbereich (12) so ausgebildet ist, dass die Schneidkante (7a, 17a, 27a) und der Befestigungsbereich (8) einen Winkel (α, γ, ζ) zueinander einschließen.

11. Schneidmesser für eine Mischvorrichtung nach einem der Ansprüche 1 bis 10, **gegennzeichnet durch** einen Befestigungsbereich (8) mit Spannungsausgleichseinrichtung (13) und wenigstens einen Befestigungsabschnitt (8a, 8b), der über wenigstens einen abgekröpften Verbindungsbereich (12) mit einer Schneidkante (7a) verbunden ist, wobei der abgekröpfte Verbindungsbereich (12) so ausgebildet ist, dass die Schneidkante (7a) und der Befestigungsabschnitt (8a, 8b) einen Winkel (α) zueinander einschließen.

12. Schneidmesser für eine Mischvorrichtung nach einem der Ansprüche 1 bis 11, **gegennzeichnet durch** einen Befestigungsbereich (8) mit Spannungsausgleichseinrichtung (13) und wenigstens einen Befestigungsabschnitt (8a, 8b), der über wenigstens einen abgekröpften Verbindungsbereich (12) mit einer Schneidkante (17a, 22a) verbunden ist, wobei der abgekröpfte Verbindungsbereich (12) so ausgebildet ist, dass die Schneidkante (17a, 27a) in einem Anfangsbereich (18, 28) und der Befestigungsabschnitt (8a, 8b) einen ersten Winkel (α) zueinander einschließen, und wobei ein Endbereich (19, 29) der Schneidkante (17a, 27a) vorgesehen ist, der in einem Winkel (β) zum Anfangsbereich (18, 28) und in einem Winkel (γ) zum Befestigungsabschnitt (8a, 8b) verläuft.

13. Schneidmesser nach Anspruch 11 oder 12, **dadurch gekennzeichnet, dass** zwei Befestigungsabschnitte (8a, 8b) im Abstand zueinander angeordnet sind, wobei sich zwischen den Befestigungsabschnitten (8a, 8b) ein vertiefter Abschnitt (12c) befindet.

## Claims

1. A mixing device (1), in particular a fodder mixer, with a mixing screw (3) rotatable about an axis of rotation (3a) and having a screw blade (5) with a receiving edge (6), and with at least one cutting blade (7,17,27) with a cutting edge (7a,17a,27a), wherein the cutting edge protrudes beyond the rim (5a) of the screw blade and at least one region of the cutting edge (7a,17a,27a) lies in a cutting plane (A,A1,A2,A3) which intersects a substantially radial extension plane (B) of the rim (5a) of the screw blade (5) at an angle (α,γ,ζ), **characterised in that** the cutting blade (7,17,27) is fastened over a fastening zone (8) with a tension-equalisation means (13) to the rim (5a) of the screw blade (5).

2. A mixing device according to Claim 1, **characterised in that** the intersecting plane (A,A1) extends substantially parallel to the pitch circle plane (C) of the receiving edge (6) of the screw blade (5) about the axis of rotation (3a).

3. A mixing device according to Claim 1, **characterised in that** the intersecting plane (A2,A3) is inclined at an angle (β) in the direction of a pitch circle plane (C) of the receiving edge (6) of the screw blade (5).

4. A mixing device according to any one of Claims 1 to 3, **characterised in that** the cutting edge (7a) extends between a cutting edge start (10) and a cutting edge end (11) in the intersecting plane (A).

5. A mixing device according to Claim 1 or 3, **characterised in that** the cutting blade (17,27) has an initial zone (18,28) adjacent a cutting edge start (10) and at least one end zone (19,29a,29b) extending in the direction of a pitch circle plane (C) of the receiving edge (6).

6. A mixing device according to Claim 5, **characterised in that** the initial zone (18) lies in a first intersecting plane (A1) and the end zone (19) lies in a second intersecting plane (A2).

7. A mixing device according to Claim 5, **characterised in that** the initial zone (28) lies in a first intersecting plane (A1) and the end zone (29) has a first angled portion (29a) in a second intersecting plane (A2) and has a second angled portion (29b) in a third intersecting plane (A3) different from the first and second intersecting planes (A1,A2).

8. A mixing device according to any one of Claims 5 to 7, **characterised in that** the end zone (19,29a,29b) has an inner surface (19a,30a,30b) aligned in a spiral tangentially to the axis of rotation (3a) of the mixing screw (3).

9. A mixing device according to any one of Claims 1 to 8, **characterised in that** the tension-equalisation means (13) comprises a two-point fastening with first and second fastening portions (8a,8b) which are disposed at a distance apart, wherein a clearance (14) is provided between the fastening portions (8a,8b).

10. A mixing device according to any one of Claims 1 to 9, **characterised in that** the cutting blade (7,17,27) has a fastening zone (8) for fastening to the rim (5a) of the screw blade (5), which is connected to the cutting edge (7a,17a,27a) via at least one angled connecting zone (12), wherein the angled connecting zone (12) is designed so that the cutting edge (7a,17a,27a) and the fastening zone (8) form an angle (α,γ,ζ) with another.

11. A cutting blade for a mixing device according to any one of Claims 1 to 10, **characterised by** a fastening zone (8) with a tension-equalisation means (13) and at least one fastening portion (8a,8b) which is connected via at least one angled connecting zone (12) to a cutting edge (7a), wherein the angled connecting zone (12) is designed so that the cutting edge (7a) and the fastening portion (8a,8b) form an angle (α) with another.

12. A cutting blade for a mixing device according to any one of Claims 1 to 11, **characterised by** a fastening zone (8) with a tension-equalisation means (13) and at least one fastening portion (8a,8b) which is connected via at least one angled connecting zone (12) to a cutting edge (17a,22a), wherein the angled connecting zone (12) is designed so that the cutting edge (17a,27a) in an initial zone (18,28) and the fastening portion (8a,8b) form a first angle (α) with another, and wherein an end zone (19,29) of the cutting edge (17a,27a) is provided, which extends at an angle (β) to the initial zone (18,28) and at an angle (γ) to the fastening portion (8a,8b).

13. A cutting blade according to Claim 11 or 12, **characterised in that** two fastening portions (8a,8b) are arranged at a distance apart, wherein a recessed portion (12c) is situated between the fastening portions (8a,8b).

## Revendications

1. Dispositif de mélange (1), en particulier mélangeur de fourrage, comprenant une vis mélangeuse (3), qui peut tourner autour d'un axe de rotation (3a) et présente une lame de vis (5) avec une arête de réception (6), et au moins un couteau (7, 17, 27) avec une arête de coupe (7a, 17a, 27a), l'arête de coupe dépassant du bord (5a) de la lame de vis et au moins une zone de l'arête de coupe (7a, 17a, 27a) se situant dans un plan de coupe (A, A1, A2, A3), qui coupe sous un angle (α, γ, ζ) un plan de prolongement (B) essentiellement radial du bord (5a) de la lame de vis (5), **caractérisé en ce que** le couteau (7, 17, 27) est fixé sur le bord (5a) de la lame de vis (5) par l'intermédiaire d'une zone de fixation (8) munie d'un dispositif d'équilibrage de tension (13).

2. Dispositif de mélange suivant la revendication 1, **caractérisé en ce que** le plan de coupe (A, A1) s'étend de façon essentiellement parallèle à un plan de cercle de vol (C) de l'arête de réception (6) de la lame de vis (5) autour de l'axe de rotation (3a).

3. Dispositif de mélange suivant la revendication 1, **caractérisé en ce que** le plan de coupe (A2, A3) est incliné sous un angle (β) en direction du plan de cercle de vol (C) de l'arête de réception (6) de la lame de vis (5).

4. Dispositif de mélange suivant l'une des revendications 1 à 3, **caractérisé en ce que** l'arête de coupe (7a) s'étend dans le plan de coupe (A) entre un début d'arête de coupe (10) et une fin d'arête de coupe (11).

5. Dispositif de mélange suivant l'une des revendications 1 et 3, **caractérisé en ce que** le couteau (17, 27) présente une zone initiale (18, 28) se raccordant à un début d'arête de coupe (10) et au moins une zone finale (19, 29a, 29b) s'étendant en direction du plan de cercle de vol (C) de l'arête de réception (6).

6. Dispositif de mélange suivant la revendication 5, **caractérisé en ce que** la zone initiale (18) se situe dans un premier plan de coupe (A1) et la zone finale (19) dans un deuxième plan de coupe (A2).

7. Dispositif de mélange suivant la revendication 5, **caractérisé en ce que** la zone initiale (28) se situe dans un premier plan de coupe (A1) et la zone finale (29) présente une première section coudée (29a) dans un deuxième plan de coupe (A2) et une seconde section coudée (29b) dans un troisième plan de coupe (A3), différent du premier et du deuxième plan de coupe (A1, A2).

8. Dispositif de mélange suivant l'une des revendications 5 à 7, **caractérisé en ce que** la zone finale (19, 29a, 29b) présente une surface intérieure (19a, 30a, 30b) orientée en forme de spirale jusqu'à tangentielle par rapport à l'axe de rotation (3a) de la vis mélangeuse (3).

9. Dispositif de mélange suivant l'une des revendications 1 à 8, **caractérisé en ce que** le dispositif d'équilibrage de tension (13) comporte une fixation en deux points avec une première et une seconde section de fixation (8a, 8b), disposées à distance l'une de l'autre, une fente (14) étant prévue entre les sections de fixation (8a, 8b).

10. Dispositif de mélange suivant l'une des revendications 1 à 9, **caractérisé en ce que** le couteau (7, 17, 27) présente une zone de fixation (8) pour la fixation sur le bord (5a) de la lame de vis (5), laquelle zone est assemblée par l'intermédiaire d'au moins une zone d'assemblage coudée (12) avec l'arête de coupe (7a, 17a, 27a), la zone d'assemblage coudée (12) étant configurée de sorte que l'arête de coupe (7a, 17a, 27a) et la zone de fixation (8) forment entre elles un angle (α, γ, ζ).

11. Couteau pour un dispositif de mélange suivant l'une des revendications 1 à 10, **caractérisé par** une zone de fixation (8) avec un dispositif d'équilibrage de tension (13) et par au moins une section de fixation (8a, 8b), qui est assemblée par l'intermédiaire d'au moins une zone d'assemblage coudée (12) avec une arête de coupe (7a), la zone d'assemblage coudée (12) étant configurée de sorte que l'arête de coupe (7a) et la section de fixation (8a, 8b) forment entre elles un angle (α).

12. Couteau pour un dispositif de mélange suivant l'une des revendications 1 à 11, **caractérisé par** une zone de fixation (8) avec un dispositif d'équilibrage de tension (13) et par au moins un section de fixation (8a, 8b), qui est assemblée par l'intermédiaire d'au moins une zone d'assemblage coudée (12) avec une arête de coupe (17a, 22a), la zone d'assemblage coudée (12) étant configurée de sorte que l'arête de coupe (17a, 27a) dans une zone initiale (18, 28) et la section de fixation (8a, 8b) forment entre elles un premier angle (α), et une zone finale (19, 29) de l'arête de coupe (17a, 27a) étant prévue, laquelle zone s'étend sous un angle (β) par rapport à la zone initiale (18, 28) et sous un angle (γ) par rapport à la section de fixation (8a, 8b).

13. Couteau suivant l'une des revendications 11 et 12, **caractérisé en ce que** deux sections de fixation (8a, 8b) sont disposées à distance l'une de l'autre, une section en creux (12c) se situant entre les sections de fixation (8a, 8b) .
